# EUROPEAN PATENT APPLICATION

(11) **EP 4 017 187 A1**
(43) Date of publication of application: **22.06.2022**
(21) Application number: 19941063.0
(22) Date of filing: 13.08.2019
(51) Int. Cl.: H04W 72/12, H04W 92/18, H04W 4/46, H04W 84/20

(54) **TERMINAL AND COMMUNICATION METHOD**

(71) Applicant: NTT DOCOMO, INC., Chiyoda-Ku Tokyo 100-6150 (JP)
(72) Inventor: YOSHIOKA, Shohei, Tokyo 100-6150 (JP); NAGATA, Satoshi, Tokyo 100-6150 (JP)
(74) Representative: Hoffmann Eitle
(86) International application number: PCT/JP2019/031869
(87) International publication number: WO 2021/029017

(57) **Abstract**

A terminal includes a receiving unit that receives at least one of specific instruction information or a specific signal; and a control unit that performs at least one of controlling scheduling of a communication performed by another terminal, modifying the association with the scheduling terminal, requesting the modification of the association with the scheduling terminal, or transmitting information related to a channel state, based on at least one of the instruction information that is periodically transmitted, information related to a channel state measured from the signal, or an association with a scheduling terminal.

## Description

### TECHNICAL FIELD

The present invention relates to a terminal and a communication method in a radio communication system.

### BACKGROUND ART

For Long Term Evolution (LTE) and a LTE successor system (e.g., LTE-Advanced (LTE-A), New Radio (NR) (which is also referred to as 5G)), sidelink (which is also referred to as Device to Device (D2D)) technology has been studied in which terminals, such as User Equipment (UE), directly communicate with each other without going through a base station.

In addition, implementation of Vehicle to Everything (V2X) has been studied and technical specifications have been developed. Here, V2X is a part of Intelligent Transport Systems (ITS) and V2X is a generic term for Vehicle to Vehicle (V2V), which implies a communication mode executed between vehicles; Vehicle to Infrastructure (V2I), which implies a communication mode executed between a vehicle and a rode-side unit (RSU: Road-Side Unit); Vehicle to Nomadic device (V2N), which implies a communication mode executed between a vehicle and a driver's mobile terminal; and a Vehicle to Pedestrian (V2P), which implies a communication mode executed between a vehicle and a pedestrian's mobile terminal.

### Related Art Document

### [Non-Patent Document]

Non-Patent Document 1: 3GPP TS 36.213 V15.2.0(2018-06)

### SUMMARY OF THE INVENTION

### [PROBLEM TO BE SOLVED BY THE INVENTION]

For NR V2X, a communication method has been proposed in which, in sidelink communication, a scheduling terminal (which may be referred to, for example, as a scheduling user equipment (UE)) schedules sidelink communication of another terminal. The above-described communication method may be referred to as a sidelink transmission mode 2-d, or may have a different name. Furthermore, a scheduling terminal may be referred to as a header terminal (header UE) or the like, and a member terminal may be referred to as a non-scheduling terminal, a non-header terminal, or the like.

In future, it is expected that a scheduling terminal provided with a scheduling function will become widespread. Furthermore, the scheduling terminal is not limited to a terminal related to a vehicle, such as that of V2X, and it is expected that the scheduling terminal will become widespread as a terminal usable in wide application. Furthermore, a communication link to be scheduled is not limited to a sidelink, and it is expected that a downlink and an uplink will become targets. There is a need for a method for appropriately controlling a scheduling terminal and a member terminal by monitoring to detect whether the scheduling terminal appropriately schedules a communication performed by another terminal.

### [MEANS FOR SOLVING THE PROBLEM]

According to an aspect of the present invention, there is provided a terminal including a receiving unit that receives at least one of specific instruction information or a specific signal; and a control unit that performs at least one of controlling scheduling of a communication performed by another terminal, modifying the association with the scheduling terminal, requesting the modification of the association with the scheduling terminal, or transmitting information related to a channel state, based on at least one of the instruction information, information related to a channel state measured from the signal, or an association with a scheduling terminal.

### [ADVANTAGE OF THE INVENTION]

According to an embodiment, a method for appropriately controlling scheduling performed by a scheduling terminal can be provided.

### BRIEF DESCRIPTION OF DRAWINGS

FIG. 1 is a diagram illustrating an example of a configuration of a radio communication system according to an embodiment.
FIG. 2 is a diagram illustrating an outline of SL transmission mode 2d.
FIG. 3 is a diagram illustrating an example of a scheduling terminal.
FIG. 4 is a diagram illustrating an example of a configuration in which a scheduling terminal is connected to the Internet without going through a cellular base station.
FIG. 5 is a diagram illustrating an example of a state in which a scheduling terminal for scheduling another terminal has moved in sidelink communication.
FIG. 6 is a diagram illustrating an example in which a base station periodically transmits, to a scheduling terminal, an indication for causing the scheduling terminal to continue performing an operation as the scheduling terminal.
FIG. 7 is a diagram illustrating an example in which a scheduling terminal measures a channel state of a Uu-link and transmits the measured channel state of the Uu-link to the base station.
FIG. 8 is a diagram illustrating an example of a functional configuration of a base station according to an embodiment.
FIG. 9 is a diagram illustrating an example of a functional configuration of a terminal according to an embodiment.
FIG. 10 is a diagram illustrating an example of a hardware configuration of the base station and the terminal according to an embodiment.

### [EMBODIMENTS OF THE INVENTION]

In the following, embodiments of the present invention (the embodiments) are described with reference to the drawings. The embodiments described below are merely examples, and the embodiments to which the present invention is applied are not limited to the following embodiments.

A method of inter-terminal direct communication according to the embodiments is assumed to be LTE or NR sidelink (SL (Sidelink)), but the method of inter-terminal direct communication is not limited to this method. Additionally, the name "sidelink" is an example and Uplink (UL) may include a function of SL without using the name "sidelink." SL may be distinguished from Downlink (DL) or UL by a difference in frequency or time resource and SL may have another name. Furthermore, a target to be scheduled by a scheduling terminal may be DL or UL.

UL and SL may also be distinguished by a difference in one or more combinations of time resources, frequency resources, time and frequency resources, reference signals referenced to determine a Pathloss in transmission power control, and reference signals used to synchronize (PSS/SSS/PSSS/SSSSS).

For example, for UL, a reference signal of an antenna port X_ANT is used as a reference signal to be referenced to determine a Pathloss in transmission power control, and for SL (including UL used as SL), a reference signal of antenna port Y ANT is used as a reference signal to be referenced to determine a Pathloss in transmission power control.

In the embodiments, it is mainly assumed that a terminal (which may be referred to as user equipment (UE)) is installed in a vehicle, but embodiments of the present invention are not limited to the embodiments. For example, a terminal may be a terminal carried by a person, a terminal may be a device installed in a drone or an aircraft, or a terminal may be a base station, an RSU, a relay station (relay node), a user equipment having a scheduling capability, or the like.

### (System Configuration)

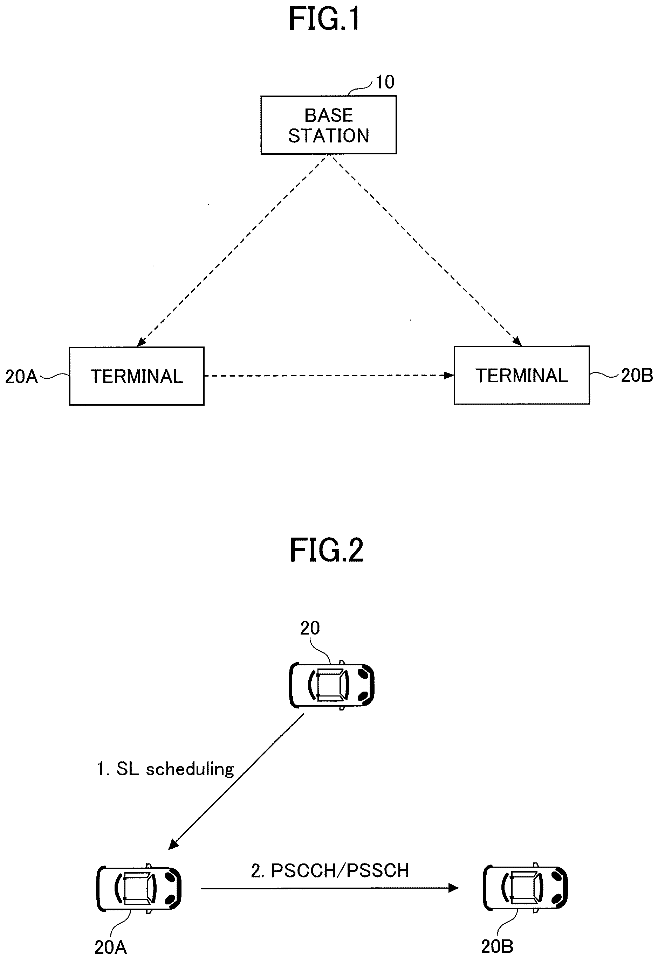

FIG. 1 is a diagram illustrating an example of a configuration of a radio communication system according to an embodiment. As illustrated in FIG. 1, a radio communication system according to the embodiment includes a base station 10, a terminal 20A, and a terminal 20B. Note that, in practice, there may be a large number of terminals, but FIG. 1 illustrates the terminal 20A and the terminal 20B as an example.

In FIG. 1, the terminal 20A is intended to be the transmitting side and the terminal 20B is intended to be the receiving side. However, each of the terminal 20A and the terminal 20B is provided with both transmission function and reception function. In the following, when the terminals 20A, 20B, and the like are not particularly distinguished, it is simply described as the terminal 20 or the terminal. In FIG. 1, for example, a case is indicated in which both the terminal 20A and the terminal 20B are within the coverage. However, the operation according to this embodiment can be applied to a case in which all the terminals 20 are within the coverage; a case in which some of the terminals 20 are within the coverage and other terminals 20 are outside the coverage; and a case in which all the terminals 20 are outside the coverage.

In the embodiments, the terminal 20 is, for example, a device installed in a vehicle such as an automobile and has a function of cellular communication as user equipment (UE) in the LTE or NR and a side link function. Additionally, the terminal 20 may include functions, such as a GPS device, a camera, various types of sensors, for obtaining report information (location, event information, or the like). The terminal 20 may be a typical mobile terminal (such as a smartphone). The terminal 20 may be an RSU. The RSU may be a UE-type RSU with UE functions, a BS-type RSU with base station functions (also referred to as gNB-type UE), or a relay station.

The terminal 20 need not be a single housing device. For example, even if various types of sensors are distributed in a vehicle, the device including the various types of sensors is the terminal 20. The terminal 20 need not include various types of sensors, and the terminal 20 may include a function for transmitting data to and receiving data from the various types of sensors.

The details of processing of sidelink transmission by the terminal 20 are basically the same as the details of processing of UL transmission in the LTE or NR. For example, the terminal 20 scrambles a code word of transmission data, modulates to generate complex-valued symbols, and maps the complex-valued symbols to one or two layers for precoding. The precoded complex-valued symbols are then mapped to a resource element to generate a transmission signal (e.g., CP-OFDM, DFT-s-OFDM) and the transmission signal is transmitted from each antenna port.

The base station 10 has a function of cellular communication as the base station 10 in LTE or NR, and the base station 10 has a function for enabling communication of the terminal 20 according to the embodiments (e.g., resource pool configuration or resource allocation). The base station 10 may be an RSU (gNB-type RSU), a relay station, or a terminal having a scheduling function.

In the radio communication system according to the embodiments, a signal waveform used by the terminal 20 for SL or UL may be OFDMA, SC-FDMA, or other signal waveforms. In the radio communication system according to the embodiments, as an example, a frame including a plurality of subframes (e.g., 10 subframes) is formed in the time direction, and the frequency direction is formed of a plurality of subcarriers. One subframe is an example of one transmission Time Interval (TTI). However, TTIs are not necessarily subframes. For example, a TTI may be in units of slots or mini-slots or other time domain units. In addition, the number of slots per subframe may be determined in accordance with the subcarrier spacing. The number of symbols per slot may be 14. In addition, one symbol may include a Cyclic Prefix (CP) which is a guard period to reduce inter-symbol interference caused by multipath.

### (Outline of NR V2X)

For NR V2X, a communication method has been proposed in which a scheduling terminal (which may be referred to, for example, as a scheduling user equipment (UE)) schedules sidelink communication of another terminal in sidelink communication. Such a communication method corresponds to SL transmission mode 2d, which has been studied in NR V2X.

FIG. 2 is a diagram illustrating an outline of SL transmission mode 2d. In SL transmission mode 2d, for example, the terminal 20 performs an operation that is the same as an operation of the base station 10. Specifically, the terminal 20 schedules transmission resources and assigns the transmission resources to the transmitting terminal 20A. The terminal 20A may perform transmission to the receiving terminal 20B by using the assigned communication resources. That is, the terminal 20 may control the transmission of another terminal 20 (e.g., the terminal 20A and/or the terminal 20B).

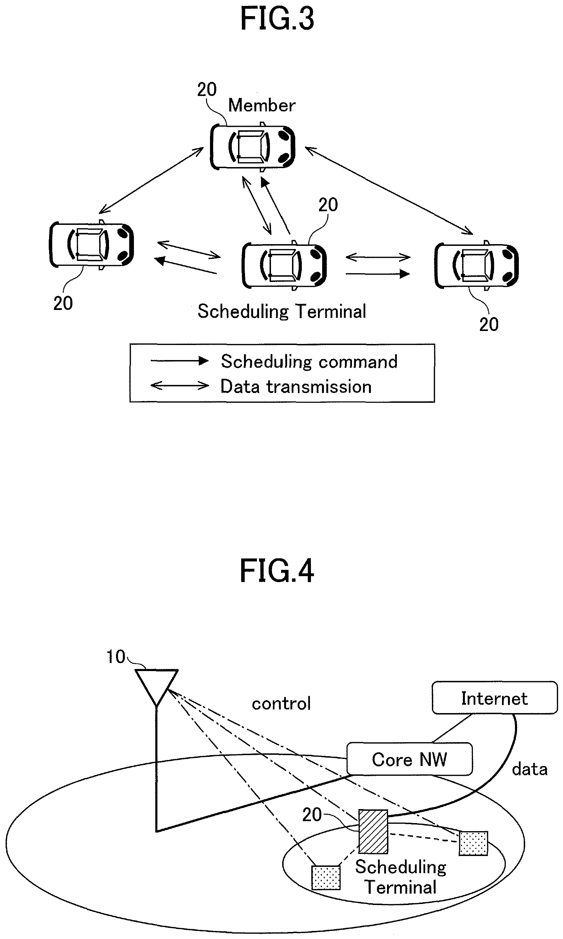

FIG. 3 is a diagram illustrating an example of a scheduling terminal. As illustrated in FIG. 3, the scheduling terminal 20 performs scheduling of transmission and reception of another terminal 20. Such a function may be supported in Release 17 of NR-V2X and a future network.

Note that, in the example of FIG. 3, it is assumed that the terminal 20 is an in-vehicle terminal 20 installed in an automobile or the like, but in the embodiments described below, the terminal 20 is not limited to this example. For example, the terminal 20 may be a terminal 20 such as a smartphone carried by the user. Furthermore, in the example of FIG. 3, it is assumed that the sidelink communication is performed, but in the embodiments described below, the communication is not limited to the communication via the sidelink, and may be a communication of uplink or a communication of downlink. Furthermore, in the embodiments described below, the scheduling terminal 20 may be replaced with a base station 10 such as, for example, Integrated Access Backhaul (IAB) node. An IAB node is a radio access network (RAN) node that has a function of establishing a radio connection with the terminal 20 and forwarding the access traffic from the terminal 20 to another node via a radio backhaul link. The following embodiments may be applied, in a case where multiple nodes are connected by a backhaul link as in the case of IAB node, any given node of the multiple nodes is configured as a node for performing scheduling of the terminal 20, or any given node of the multiple nodes is configured as a node not performing scheduling of the terminal 20.

For example, as a configuration of a network, as illustrated in the example of FIG. 4, the scheduling terminal 20 may be connected to the Internet without going through the cellular base station 10.

A procedure for configuring and canceling the configuring of the scheduling terminal 20 described in the following embodiments may be, for example, a repetition of the following five steps.
Step 0: a state in which the scheduling terminal 20 is not present.
Step 1: the base station 10 configures or specifies a specific terminal 20 as a scheduling terminal 20.
Step 2: one or more terminals 20 that do not perform scheduling are configured as a target of control by the scheduling terminal 20.
Step 3: communication is performed between the scheduling terminal 20 and the one or more terminals 20 that do not perform scheduling. Furthermore, monitoring is performed to detect whether the scheduling by the scheduling terminal 20 is performed appropriately.
Step 4: in a case where it is detected that the scheduling by the scheduling terminal 20 is not performed appropriately, the scheduling terminal 20 is configured or specified as a terminal that does not perform scheduling.

Thereafter, steps 0 to 4 are repeated.

### (Problem)

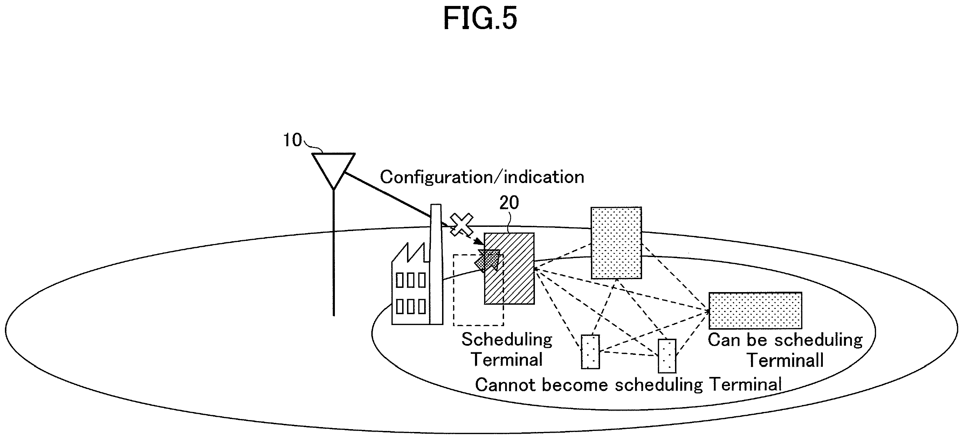

FIG. 5 is a diagram illustrating an example of a state in which a scheduling terminal for scheduling another terminal has moved in sidelink communication. In the example of FIG. 5, as the scheduling terminal 20 has moved, the communication between the base station 10 and the scheduling terminal 20 becomes non-line-of-sight communication, and accordingly, the channel state decreases relative to the channel state before the scheduling terminal 20 has moved. Accordingly, the scheduling terminal 20 may be unable to receive an instruction from the base station 10 (gNB) for causing the scheduling terminal 20 to operate as the scheduling terminal 20. In other words, the base station 10 may be unable to control the scheduling terminal 20. Accordingly, the scheduling terminal 20 of FIG. 5 may be unable to perform appropriate scheduling for another terminal 20 in the sidelink communication. For example, when the interference situation changes, the base station 10 can change the sidelink communication configuration. However, if the scheduling terminal 20 cannot communicate with the base station 10, the scheduling terminal 20 may be unable to receive information indicating the change in the sidelink communication configuration from the base station 10. Accordingly, when a specific terminal 20 is configured as the scheduling terminal 20 that performs scheduling in the sidelink communication, monitoring may be performed to detect whether scheduling by the scheduling terminal 20 is performed appropriately thereafter.

It is desirable to appropriately control the scheduling terminal 20 and another terminal 20 according to the result of the monitoring. For example, as in the example of FIG. 5, in a case where the scheduling terminal 20 can no longer receive a signal from the base station 10, the scheduling function of the scheduling terminal 20 may be stopped. Furthermore, for example, another terminal 20 scheduled by the scheduling terminal 20 in the example of FIG. 5 may update the path of communication including that of the sidelink, such as releasing the connection with the scheduling terminal 20 and configuring connection with another terminal 20 and/or the base station 10.

(Proposal A) In the example of Proposal A, monitoring is performed to detect whether the scheduling of another terminal 20 by the scheduling terminal 20 is appropriately performed. In a case where it is detected that the scheduling of another terminal 20 by the scheduling terminal 20 is not appropriately performed, the scheduling of another terminal 20 by the scheduling terminal 20 may be controlled (for example, stopped).

### (A1)

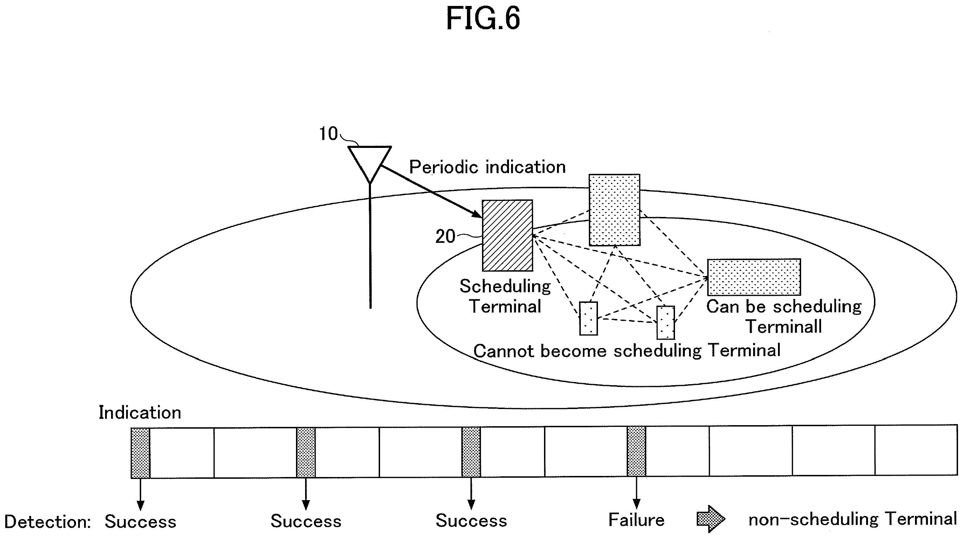

For example, as illustrated in FIG. 6, the base station 10 periodically transmits, to the scheduling terminal 20, a specific instruction, for example, an indication for causing the scheduling terminal 20 to continue operating as the scheduling terminal 20, and the scheduling terminal 20 periodically receives the instruction. In the embodiments and the present invention, the instruction may be transmitted from a device other than the base station 10 (for example, another terminal 20). In the example of FIG. 6, the scheduling terminal 20 receives the instruction from the base station 10 per two slots. The scheduling terminal 20 may control the scheduling of communication by another terminal 20 based on the instruction. For example, while the scheduling terminal 20 is successfully receiving instructions from the base station 10, the scheduling terminal 20 is assumed to be in a state in which the scheduling terminal 20 is capable of receiving the configuration related to the scheduling for another terminal 20. Accordingly, while the scheduling terminal 20 is successfully receiving instructions from the base station 10, the scheduling of another terminal 20 by the scheduling terminal 20 may be allowed to be continued. In a case where the scheduling terminal 20 can no longer receive the instruction from the base station 10, it is likely that the scheduling of another terminal 20 by the scheduling terminal 20 is not performed appropriately. In this case, the scheduling of another terminal 20 by the scheduling terminal 20 may be stopped.

A notification of the instruction (indication) for causing the scheduling terminal 20 to continue operating as the scheduling terminal 20, which is received by the scheduling terminal 20, may be transmitted by, for example, defining a new Downlink Control Information (DCI) format and transmitting the DCI format, may be transmitted while indicating that the instruction is for the scheduling terminal 20 by attaching a specific Radio Network Temporary Identifier (RNTI) to the instruction information (for example, scrambling a CRC related to the DCI), may be transmitted in a particular DCI field, or may be transmitted by a Medium Access Control (MAC) Control Element (CE).

At least one of the configuration of a period, a monitoring occasion, a physical resource, and the like related to transmission and reception of the instruction (indication) for causing the scheduling terminal 20 to continue operating as the scheduling terminal 20, which is received by the scheduling terminal 20, may be configured for the scheduling terminal 20 by, for example, a higher layer parameter.

The scheduling terminal 20 having received the instruction transmitted by the base station 10 to the scheduling terminal 20 and that causes the scheduling terminal 20 to continue operating as the scheduling terminal 20 may perform, for example, a feedback for the reception of the instruction to the base station 10, and/or may continue operating as the scheduling terminal 20.

In a case where the scheduling terminal 20 fails to receive the instruction transmitted from the base station 10 to cause the scheduling terminal 20 to continue operating as the scheduling terminal 20, the scheduling terminal 20 may perform, for example, a feedback as to the failure of reception of the instruction to the base station 10, and/or may temporarily or completely stop the scheduling for another terminal 20. Here, "the scheduling terminal 20 fails to receive the instruction for causing the scheduling terminal 20 to continue operating as the scheduling terminal 20" may mean that, for example, the scheduling terminal 20 fails to receive the instruction once, the scheduling terminal 20 fails to receive the instruction Z times, or the scheduling terminal 20 fails to receive the instruction while a predetermined timer is operating. The value Z may be defined, (pre-)configured, or instructed.

According to the method of A1 described above, the scheduling terminal 20 can stop the scheduling for another terminal 20 without an explicit instruction for stopping the scheduling from the base station 10.

### (A2)

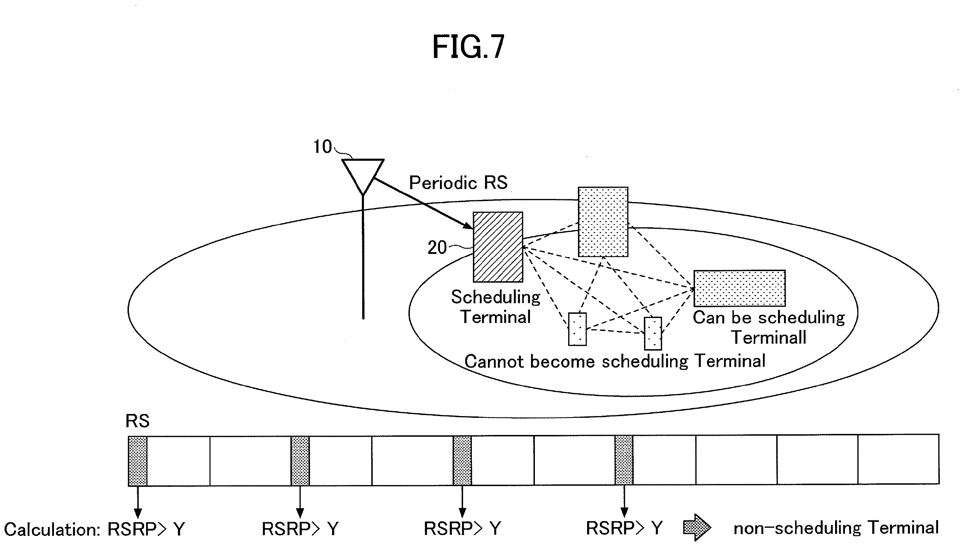

For example, as illustrated in FIG. 7, the scheduling terminal 20 may measure the channel state of a Uu-link (a link between the terminal 20 and the Radio Access Network (RAN)). The scheduling terminal 20 may transmit the measured Uu-link channel state to the base station 10, and the base station 10 may determine whether to cause the scheduling terminal 20 to continue operating as the scheduling terminal 20 in accordance with the channel state of the Uu-link. The measurement and the transmission of the channel state of the Uu-link may be a measurement and transmission based on L1 Reference Signal Received Power (RSRP), may be a measurement and transmission based on L3 RSRP, or may be a measurement and transmission of Channel State Information (CSI).

The configuration of the measurement of the channel state of the Uu-link may be made by, for example, configuring a higher layer parameter for the scheduling terminal 20.

Furthermore, scheduling, by the scheduling terminal 20, of communication by another terminal 20 may be controlled at any time or based on information related to the channel state. For example, in a case where at least one condition of the following conditions is satisfied, the scheduling of another terminal 20 by the scheduling terminal 20 may be stopped temporarily or completely.

Condition 1: an event in which an RSRP becomes less than (or becomes equal to or less than) a threshold value Y occurs once or Z Y times, or occurs during an operation of a predetermined timer. It should be noted that Z_Y may be defined, (pre-)configured, or instructed.

Condition 2: an event in which a CQI index becomes less than (or becomes equal to or less than) a threshold value X occurs once or Z X times, or occurs during an operation of a predetermined timer. It should be noted that Z_X may be defined, (pre-) configured, or instructed.

Condition 3: an event in which a value related to an achievable throughput (for example, Transport Block Size (TBS), layer, Modulation and Coding Scheme (MCS) index / Hybrid Automatic Repeat Request (HARQ) process) becomes less than (or becomes equal to or less than) W occurs once or Z_W times, or occurs during an operation of a predetermined timer. It should be noted that Z_W may be defined, (pre-)configured, or instructed.

Condition 4: a case where Radio Link Failure (RLF) is detected, and/or RRC connection reestablishment is started.

Condition 5: a case where Beam Failure is detected, and/or a case where Beam Failure Recovery is started, and/or a case where random access procedure is started.

The scheduling terminal 20 may measure the channel state of the Uu-link, and in a case where at least one condition of the above-described conditions is satisfied, the scheduling terminal 20 may autonomously stop the scheduling for another terminal 20.

Alternatively, or additionally, the base station 10 may measure the channel state of the Uu-link, and in a case where at least one of the above-described conditions is satisfied, the base station 10 may instruct the scheduling terminal 20 to stop the scheduling for another terminal 20.

It should be noted that the notification of the instruction by the base station 10 may be transmitted (i) by, for example, defining a new DCI format and transmitting the DCI format, (ii) may be transmitted while indicating that the instruction is for the scheduling terminal 20 by attaching a specific RNTI to the instruction information, (iii) may be transmitted in a particular DCI field, or (iv) may be transmitted by a MAC CE.

Furthermore, the configuration of a period, a monitoring occasion, a physical resource, and the like related to transmission of the instruction by the base station 10 may be made by, for example, a higher layer parameter.

According to the method A2 described above, whether to cause the scheduling terminal 20 to continue operating as the scheduling terminal 20 can be determined based on a necessary channel state.

### (A3)

For example, the scheduling terminal 20 may transmit a reference signal to the base station 10. Additionally and/or alternatively, the scheduling terminal 20 may receive a specific instruction, for example, an indication as to whether the operation as the scheduling terminal 20 can be continued or not.

The base station 10 may measure the channel state of the Uu-link based on a reference signal received from the scheduling terminal 20. The measurement of the channel state of the Uu-link may be a measurement based on L1 RSRP, may be a measurement based on L3 RSRP, or may be a measurement of CSI.

In a case where the scheduling terminal 20 receives an instruction for stopping the scheduling for another terminal 20 transmitted from the base station 10, the scheduling terminal 20 may temporarily or completely stop the scheduling for another terminal 20.

Alternatively, in a case where the base station 10 periodically transmits, to the scheduling terminal 20, the instruction for causing the scheduling terminal 20 to continue operating as the scheduling terminal 20, and the scheduling terminal 20 fails to receive the instruction, the scheduling terminal 20 may temporarily or completely stop the scheduling for another terminal 20.

According to the method A3 described above, whether the scheduling terminal 20 is to continue the operation as the scheduling terminal 20 is determined by the base station 10, and, thus, the scheduling terminal 20 need not to determine whether the operation as the scheduling terminal 20 is to be continued.

It should be noted that the notification of the instruction transmitted by the base station 10 to the scheduling terminal 20 may be transmitted (i) by, for example, defining a new DCI format and transmitting the DCI format, (ii) may be transmitted while indicating that the instruction is for the scheduling terminal 20 by attaching a specific RNTI to the instruction information, (iii) may be transmitted in a particular DCI field, or (iv) may be transmitted by a MAC CE.

The configuration of a period, a monitoring occasion, a physical resource, and the like related to transmission of the instruction transmitted by the base station 10 to the scheduling terminal 20 may be made by, for example, a higher layer parameter.

### (Proposal B)

In the following, an example of operation of another terminal 20 (hereinafter, the another terminal 20) scheduled by the scheduling terminal 20 is described.

### (B1)

For example, the another terminal 20 may receive a specific instruction, for example, a notification indicating that the scheduling terminal 20 has stopped the scheduling for the another terminal 20, from the base station 10 or the scheduling terminal 20.

When the notification is received or after the notification is received, the another terminal 20 may control association with the scheduling terminal 20. For example, the another terminal 20 may depart from the control of the scheduling terminal 20 (i.e., a state may change into a state in which the another terminal 20 is not scheduled by the scheduling terminal 20). When the another terminal 20 departs from the control of the scheduling terminal 20, the another terminal 20 may or may not transmit, to the base station 10, a notification that the another terminal 20 is departing from the control of the scheduling terminal 20.

According to the method B1 described above, the another terminal 20 scheduled by the scheduling terminal 20 can detect that the another terminal 20 needs to update the connection as the scheduling has stopped.

It should be noted that the notification from the base station 10 (or the scheduling terminal 20) to the another terminal 20 may be transmitted (i) by, for example, defining a new DCI format (or an SCI format) and transmitting the DCI format (or the SCI format), (ii) may be transmitted while indicating that the instruction is for the scheduling terminal 20 by attaching a specific RNTI to the instruction information, (iii) may be transmitted in a particular DCI field (or an SCI field), or (iv) may be transmitted by a MAC CE.

The configuration of a period, a monitoring occasion, a physical resource, and the like, related to a notification to be transmitted by the base station 10 (or the scheduling terminal 20) to the another terminal 20, may be performed by, for example, a higher layer parameter.

### (B2)

For example, the another terminal 20 may receive a specific instruction, for example, a notification indicating that the scheduling terminal 20 has stopped the scheduling for the another terminal 20, from the scheduling terminal 20. In this case, the another terminal 20 may transmit, to the base station 10, a notification that the scheduling terminal 20 has stopped the scheduling for the another terminal 20.

After the another terminal 20 transmits the notification to the base station 10, before the another terminal 20 transmits the notification to the base station 10, or when the another terminal 20 transmits the notification to the base station 10, the another terminal 20 may control association with the scheduling terminal 20. For example, the another terminal 20 may depart from the control of the scheduling terminal 20.

According to the method B2 described above, the base station 10 can detect that the scheduling terminal 20 has stopped the scheduling for the another terminal 20.

### (B3)

Another terminal 20 may control association with the scheduling terminal 20 based on the association with the scheduling terminal 20. For example, when the scheduling terminal 20 stops the scheduling for another terminal 20, the another terminal 20 which has departed from the control of the scheduling terminal 20 or which is out of the control of the scheduling terminal 20 may transmit a request of an association with a new scheduling terminal 20 to a terminal 20 other than the another terminal 20 or the base station 10. Additionally or alternatively, the another terminal 20 may autonomously search for a new scheduling terminal 20. Additionally or alternatively, the another terminal 20 may request or declare, to a terminal 20 other than the another terminal 20 and/or the base station 10, that the another terminal 20 itself becomes a new scheduling terminal 20.

According to the method B3 described above, after the another terminal 20 has departed from the control of the scheduling terminal 20, the another terminal 20 can update the connection.

### (B4)

For example, the another terminal 20 scheduled by the scheduling terminal 20 may report information related to the channel state between the another terminal 20 and the scheduling terminal 20 (for example, channel state and/or performance) to the base station 10.

The base station 10 may determine whether the scheduling of another terminal 20 by the scheduling terminal 20 is to be continued based on the report.

For example, in a case where the channel state between the another terminal 20 and the scheduling terminal 20 is favorable but the performance is unfavorable (for example, the throughput has not attained the target value), the state of Uu-link between the scheduling terminal 20 and the base station 10 may be unfavorable.

According to the method B4 described above, based on a requirement for the performance of the another terminal 20, whether the scheduling terminal 20 is to continue scheduling of the another terminal 20 can be determined, and the connection of the another terminal 20 can be updated.

### (B5)

For example, the another terminal 20 may perform a predetermined operation at any time or based on information related to the channel state. For example, in a case where at least one of the following conditions is satisfied, the predetermined operation may be performed.

Condition 1: an event in which an RSRP of SL or Uu becomes less than (or becomes equal to or less than) a threshold value V occurs once or Z V times, or occurs during an operation of a predetermined timer. It should be noted that Z V may be defined, (pre-)configured, or instructed.

Condition 2: an event in which a CQI index of SL or Uu becomes less than (or becomes equal to or less than) U occurs once or Z U times, or occurs during an operation of a predetermined timer. It should be noted that Z_U may be defined, (pre-) configured, or instructed.

Condition 3: an event in which a value related to an achievable throughput (for example, Transport Block Size (TBS), layer, Modulation and Coding Scheme (MCS) index / Hybrid Automatic Repeat Request (HARQ) process) becomes less than (or becomes equal to or less than) T occurs once or Z_T times, or occurs during an operation of a predetermined timer. It should be noted that Z_T may be defined, (pre-)configured, or instructed.

Condition 4: a case where Radio Link Failure (RLF) is detected, and/or RRC connection reestablishment is started, and/or PC5-RRC connection reestablishment is started.

Condition 5: a case where Beam Failure is detected, and/or a case where Beam Failure Recovery is started, and/or a case where random access procedure is started.

The predetermined operation may be to control an association with the scheduling terminal. For example, the predetermined operation may be transmitting a request for an association with a new scheduling terminal 20 to a terminal 20 other than the another terminal 20 or the base station 10, may be autonomously performing a search for a new scheduling terminal 20, or may be requesting or declaring, to a terminal 20 other than the another terminal 20 and/or the base station 10, that the another terminal 20 itself becomes a new scheduling terminal 20.

According to the method B5 described above, the another terminal 20 can request updating of the connection of the another terminal 20 based on a requirement on performance for the another terminal 20.

### (Modified example)

For example, from among the above-described embodiments, in the example of B4, the scheduling terminal 20 is controlled by the base station 10, and the another terminal 20 scheduled by the scheduling terminal 20 reports, to the base station 10, the channel state between the another terminal 20 and the scheduling terminal 20 and/or the performance. However, the embodiment is not limited to this example. For example, the scheduling terminal 20 may autonomously perform the control without being controlled by the base station 10. In this case, the another terminal 20 may report, to the scheduling terminal 20, the channel state between the another terminal 20 and the scheduling terminal 20 and/or the performance. Based on the report, the scheduling terminal 20 may determine whether the scheduling of the another terminal 20 by the scheduling terminal 20 is to be continued.

### (Device configuration)

Next, a functional configuration example of the base station 10 and the terminal 20 that perform the processing operations described above is described.

### <Base Station 10>

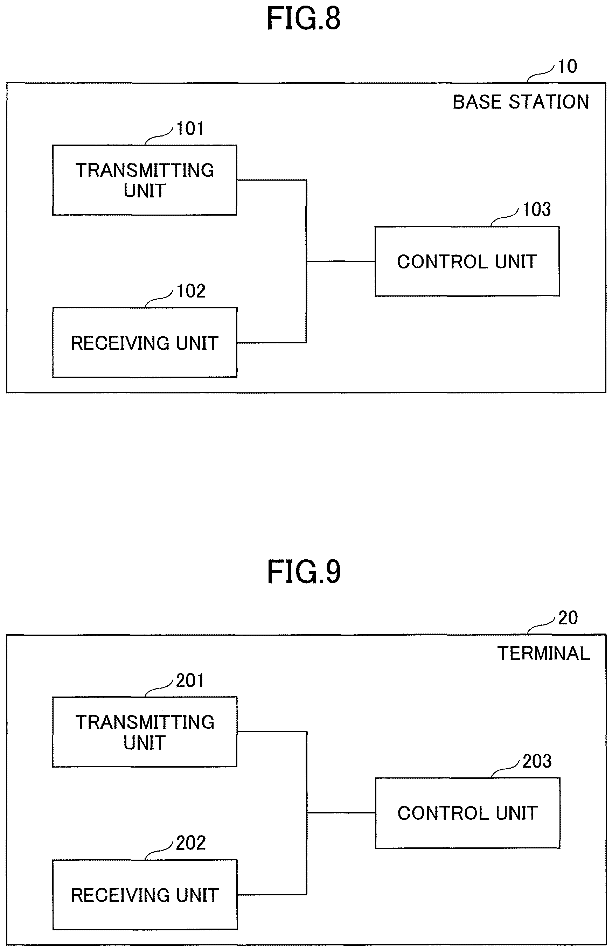

FIG. 8 is a diagram illustrating an example of a functional configuration of the base station 10. As illustrated in FIG. 8, the base station 10 includes a transmitting unit 101, a receiving unit 102, and a control unit 103. The functional configuration illustrated in FIG. 8 is merely one example. The functional division and names of functional units may be any division and names, provided that the operation according to the embodiments of the present invention can be performed. Note that the transmitting unit 101 may be referred to as a transmitting device, and the receiving unit 102 may be referred to as a receiving device.

The transmitting unit 101 includes a function for generating a signal to be transmitted to the terminal and wirelessly transmitting the signal. The receiving unit 102 includes a function for receiving various types of signals wirelessly transmitted from the terminal 20 and obtaining a higher layer signal from the received signal. Furthermore, the receiving unit 102 includes a function for measuring a received signal to obtain a quality value.

The control unit 103 controls the base station 10. Note that a function of the control unit 103 related to transmission may be included in the transmitting unit 101 and a function of the control unit 103 related to reception may be included in the receiving unit 102.

The control unit 103 of the base station 10 may specify a specific terminal 20, from among a plurality of terminals 20 that perform sidelink communication, as a scheduling terminal 20 that performs scheduling of another terminal that performs sidelink communication. Furthermore, the control unit 103 of the base station 10 may monitor whether the scheduling of another terminal 20 by the scheduling terminal 20 is performed appropriately, and in a case where it is detected that the scheduling by the scheduling terminal 20 is not performed appropriately, the control unit 103 of the base station 10 may configure or specify the scheduling terminal 20 as a terminal that does not perform scheduling.

Furthermore, for example, the transmitting unit 101 of the base station 10 may periodically transmit, to the scheduling terminal 20, the instruction (indication) for causing the scheduling terminal 20 to continue operating as the scheduling terminal 20. For example, in a case where the transmitting unit 101 of the base station 10 periodically transmits, to the scheduling terminal 20, the instruction for causing the scheduling terminal 20 to continue operating as the scheduling terminal 20, and the receiving unit 102 receives, from the scheduling terminal 20, a feedback indicating that the instruction is not received , the control unit 103 of the base station 10 may select to stop the scheduling of another terminal 20 by the scheduling terminal 20.

Furthermore, for example, the receiving unit 102 of the base station 10 may receive, from the scheduling terminal 20, information indicating the channel state of the Uu-link measured by the scheduling terminal 20, and the control unit 103 of the base station 10 may determine whether to cause the scheduling terminal 20 to continue the operation as the scheduling terminal 20 in accordance with the channel state of the Uu-link.

Furthermore, for example, the receiving unit 102 of the base station 10 may receive a reference signal transmitted from the scheduling terminal 20 and measure the channel state, and the control unit 103 of the base station 10 may determine whether to cause the scheduling terminal 20 to continue the operation as the scheduling terminal 20 based on the channel state. The transmitting unit 101 of the base station 10 may transmit, to the scheduling terminal 20, an instruction as to whether the scheduling terminal 20 is caused to continue operating as the scheduling terminal 20.

Furthermore, for example, the transmitting unit 101 of the base station 10 may transmit, to another terminal 20, a notification that the scheduling terminal 20 has stopped the scheduling for the another terminal 20. Furthermore, for example, the receiving unit 102 of the base station 10 may receive, from the another terminal 20, a notification that the another terminal 20 has departed from the control of the scheduling terminal 20. Furthermore, for example, the receiving unit 102 of the base station 10 may receive, from another terminal 20, a notification that the scheduling terminal 20 has stopped the scheduling for the another terminal 20.

Furthermore, for example, the receiving unit 102 of the base station 10 may receive, from another terminal 20, a request for an association with a new scheduling terminal 20, and the control unit 103 of the base station 10 may specify the new scheduling terminal 20. The transmitting unit 101 of the base station 10 may transmit information for specifying the new scheduling terminal 20 to another terminal 20. Furthermore, for example, the receiving unit 102 of the base station 10 may receive, from another terminal 20, a request or declaration that the another terminal 20 becomes a new scheduling terminal 20.

Furthermore, for example, the receiving unit 102 of the base station 10 may receive, from another terminal 20, information indicating the channel state between the another terminal 20 and the scheduling terminal 20 and/or information indicating the performance. The control unit 103 of the base station 10 may determine whether the scheduling of another terminal 20 by the scheduling terminal 20 is to be continued, based on information indicating the channel state between the another terminal 20 and the scheduling terminal 20 and/or information indicating the performance, which are received by the receiving unit 102.

### <Terminal 20>

FIG. 9 is a diagram illustrating an example of a functional configuration of the terminal 20. As illustrated in FIG. 9, the terminal 20 includes a transmitting unit 201, a receiving unit 202, and a control unit 203. The functional configuration illustrated in FIG. 15 is merely an example. The functional division and names of functional units may be any division and names, provided that the operation according to the embodiments can be performed. Note that the transmitting unit 201 may be referred to as a transmitting device, and the receiving unit 202 may be referred to as a receiving device. Furthermore, the terminal 20 may be the transmitting terminal 20A or the receiving terminal 20B (i.e., the terminal 20 may be another terminal 20). Furthermore, the terminal 20 may be the scheduling terminal 20.

The transmission unit 201 generates a transmitting signal from transmitting data and transmits the transmitting signal through radio. The receiving unit 202 receives various types of signals and obtains a higher layer signal from the received physical layer signal. The receiving unit 220 includes a function for measuring a received signal and obtaining a quality value.

The control unit 203 controls of the terminal 20. Note that the function of the control unit 203 related to transmission may be included in the transmitting unit 201, and the function of the control unit 203 related to reception may be included in the receiving unit 202.

For example, the receiving unit 202 of the scheduling terminal 20 may periodically receive the instruction for causing the scheduling terminal 20 to continue operating as the scheduling terminal 20. While the receiving unit 202 of the scheduling terminal 20 is successfully receiving one or more instructions from the base station 10, the control unit 203 of the scheduling terminal 20 may choose to continue the scheduling for another terminal 20. In a case where the receiving unit 202 of the scheduling terminal 20 does not receive an instruction from the base station 10, the transmitting unit 201 of the scheduling terminal 20 may transmit, to the base station 10, a feedback as to the failure of reception of the instruction. In a case where the receiving unit 202 of the scheduling terminal 20 does not receive an instruction from the base station 10, the control unit 203 of the scheduling terminal 20 may choose to stop the scheduling for another terminal 20.

For example, the receiving unit 202 of the scheduling terminal 20 may measure the channel state of the Uu-link. The transmitting unit 201 of the scheduling terminal 20 may transmit, to the base station 10, information indicating the channel state of the Uu-link. Furthermore, the control unit 203 of the scheduling terminal 20 may stop the scheduling for another terminal 20 based on the instruction from the base station 10 received by the receiving unit 202.

For example, the transmitting unit 201 of the scheduling terminal 20 may transmit a reference signal to the base station 10. The receiving unit 202 of the scheduling terminal 20 may receive, from the base station 10, an instruction as to whether the operation as the scheduling terminal 20 is to be continued. In a case where the receiving unit 202 receives, from the base station 10, an instruction for stopping the scheduling for another terminal 20, the control unit 203 of the scheduling terminal 20 may temporarily or completely stop the scheduling for the another terminal 20.

Furthermore, for example, the receiving unit 202 of the another terminal 20 may receive, from the base station 10 or the scheduling terminal 20, a notification that the scheduling terminal 20 has stopped the scheduling for another terminal 20. In a case where the receiving unit 202 of the another terminal 20 has received a notification that the scheduling terminal 20 has stopped the scheduling for the another terminal 20, the control unit 203 of the another terminal 20 may select to depart from the control of the scheduling terminal 20. The transmitting unit 201 of the another terminal 20 may transmit, to the base station 10, a notification that the another terminal 20 has departed from the control of the scheduling terminal 20.

For example, in a case where the receiving unit 202 of the another terminal 20 has received a notification that the scheduling terminal 20 has stopped the scheduling for another terminal 20, the transmitting unit 201 of the another terminal 20 may transmit, to the base station 10, a notification that the scheduling terminal 20 has stopped the scheduling for another terminal 20. After the transmitting unit 201 of the another terminal 20 transmits the notification, the control unit 203 of the another terminal 20 may select to depart from the control of the scheduling terminal 20.

For example, the transmitting unit 201 of the another terminal 20 having departed from the control of the scheduling terminal 20 may transmit a request for an association with a new scheduling terminal 20 to a terminal 20 other than the scheduling terminal 20 and the another terminal 20 and/or the base station 10. Furthermore, the receiving unit 202 of the another terminal 20 having departed from the control of the scheduling terminal 20 may autonomously perform search for a new scheduling terminal 20. The transmitting unit 201 of the another terminal 20 having departed from the control of the scheduling terminal 20 may transmit, to a terminal 20 other than the scheduling terminal 20 and the another terminal 20 and/or the base station 10, a request or declaration that the another terminal 20 itself becomes a new scheduling terminal 20.

For example, the transmitting unit 201 of the another terminal 20 scheduled by the scheduling terminal 20 may report, to the base station 10, the channel state between the another terminal 20 and the scheduling terminal 20 and/or the performance.

Furthermore, for example, in a case where an achievable throughput (with regard to Transport Block Size (TBS), layer, Modulation and Coding Scheme (MCS) index / Hybrid Automatic Repeat Request (HARQ) process and the like) becomes less than W once or Z W times (Z_W>1) or during an operation of a predetermined timer, the transmitting unit 201 of the another terminal 20 scheduled by the scheduling terminal 20 may request a terminal 20 other than the scheduling terminal 20 and the another terminal 20 and/or the base station 10 to make an association with another scheduling terminal 20. Alternatively, for example, in a case where an achievable throughput (with regard to Transport Block Size (TBS), layer, Modulation and Coding Scheme (MCS) index / Hybrid Automatic Repeat Request (HARQ) process and the like) becomes less than W once or Z W times (Z_W>1) or during an operation of a predetermined timer, the receiving unit 202 of the another terminal 20 scheduled by the scheduling terminal 20 may autonomously search for a new scheduling terminal 20. Alternatively, for example, in a case where an achievable throughput (with regard to Transport Block Size (TBS), layer, Modulation and Coding Scheme (MCS) index / Hybrid Automatic Repeat Request (HARQ) process and the like) becomes less than W once or Z W times (Z_W>1) or during an operation of a predetermined timer, the transmitting unit 201 of the another terminal 20 scheduled by the scheduling terminal 20 may transmit, to a terminal 20 other than the scheduling terminal 20 and the another terminal 20 and/or the base station 10, a request or declaration that the another terminal 20 itself becomes a new scheduling terminal 20.

### <Hardware configuration>

The block diagrams (FIG. 8 to FIG. 9) used for the description of the above embodiments illustrate blocks of functional units. These functional blocks (components) are implemented by any combination of at least one of hardware and software. In addition, the implementation method of each functional block is not particularly limited. That is, each functional block may be implemented using a single device that is physically or logically combined, or may be implemented by directly or indirectly connecting two or more devices that are physically or logically separated (e.g., using wire or radio) and using these multiple devices. The functional block may be implemented by combining software with the above-described one device or the above-described plurality of devices. Functions include, but are not limited to, judgment, decision, determination, computation, calculation, processing, derivation, research, search, verification, reception, transmission, output, access, resolution, choice, selection, establishment, comparison, assumption, expectation, deeming, broadcasting, notifying, communicating, forwarding, configuring, reconfiguring, allocating, mapping, assigning, and the like. For example, a functional block (component) that functions to transmit is called a transmitting unit or a transmitter. In either case, as described above, the implementation method is not particularly limited.

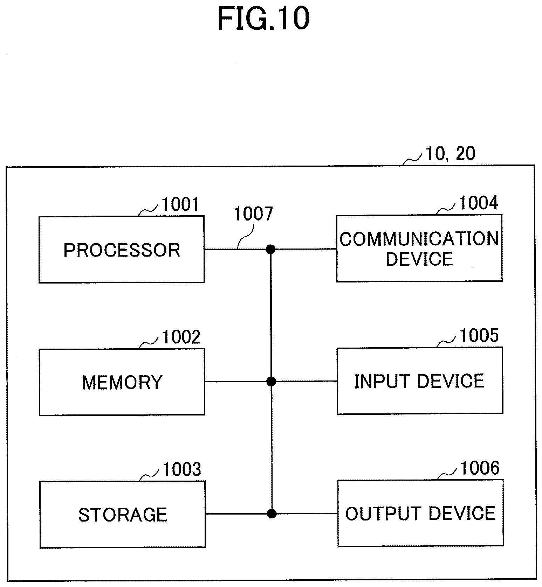

For example, the terminal 20 and the base station 10 according to the embodiments of the present invention may function as computers performing the process of the radio communication according to the embodiments of the present invention. FIG. 10 is a diagram illustrating an example of a hardware configuration of the terminal 20 and the base station 10 according to the embodiment. Each of the above-described terminal 20 and the base station 10 may be physically configured as a computer device including a processor 1001, a memory 1002, a storage 1003, a communication device 1004, an input device 1005, an output device 1006, a bus 1007, or the like.

Note that, in the following description, the term "device" can be replaced with a circuit, a device, a unit, or the like. The hardware configuration of the terminal 20 and the base station 10 may be configured to include one or more of the devices depicted in the figures, which are indicated by 1001 through 1006, or may be configured without some devices.

Each function of the terminal 20 and the base station 10 is implemented by loading predetermined software (program) on hardware, such as the processor 1001 and the memory 1002, so that the processor 1001 performs computation and controls communication by the communication device 1004, and at least one of reading and writing of data in the memory 1002 and the storage 1003.

The processor 1001, for example, operates an operating system to control the entire computer. The processor 1001 may be configured with a central processing unit (CPU: Central Processing Unit) including an interface with a peripheral device, a control device, a processing device, a register, or the like.

Additionally, the processor 1001 reads a program (program code), a software module, data, or the like from at least one of the storage 1003 and the communication device 1004 to the memory 1002, and executes various processes according to these. As the program, a program is used which causes a computer to execute at least a part of the operations described in the above-described embodiment. For example, the control unit 203 of the terminal 20 may be implemented by a control program that is stored in the memory 1002 and that is operated by the processor 1001. While the various processes described above are described as being executed in one processor 1001, they may be executed simultaneously or sequentially by two or more processors 1001. The processor 1001 may be implemented by one or more chips. The program may be transmitted from a network via a telecommunications line.

The memory 1002 is a computer readable storage medium, and, for example, the memory 1002 may be formed of at least one of a Read Only Memory (ROM), an Erasable Programmable ROM (EPROM), an Electrically Erasable Programmable ROM (EEPROM), and a Random Access Memory (RAM). The memory 1002 may be referred to as a register, a cache, a main memory (main storage device), or the like. The memory 1002 may store a program (program code), a software module, or th like, which can be executed for implementing the radio communication method according to the embodiments of the present disclosure.

The storage 1003 is a computer readable storage medium and may be formed of, for example, at least one of an optical disk, such as a Compact Disc ROM (CD-ROM), a hard disk drive, a flexible disk, an optical magnetic disk (e.g., a compact disk, a digital versatile disk, a Blu-ray (registered trademark) disk), a smart card, a flash memory (e.g., a card, a stick, a key drive), a floppy (registered trademark) disk, or a magnetic strip. The storage 1003 may be referred to as an auxiliary storage device. The above-described storage medium may be, for example, a database including at least one of the memory 1002 and the storage 1003, a server, or any other suitable medium.

The communication device 1004 is hardware (transmitting and receiving device) for performing communication between computers through at least one of a wired network and a wireless network, and is also referred to, for example, as a network device, a network controller, a network card, a communication module, or the like. The communication device 1004 may be configured to include, for example, a high frequency switch, a duplexer, a filter, a frequency synthesizer, or the like to implement at least one of frequency division duplex (FDD: Frequency Division Duplex) and time division duplex (TDD: Time Division Duplex).

The input device 1005 is an input device (e.g., a keyboard, mouse, microphone, switch, button, or sensor) that receives an external input. The output device 1006 is an output device (e.g., a display, speaker, or LED lamp) that implements an external output. The input device 1005 and the output device 1006 may have an integrated configuration (for example, a touch panel).

Each device, such as the processor 1001 and the memory 1002, is also connected by the bus 1007 for communicating information. The bus 1007 may be formed of a single bus or may be formed of different buses between devices.

The terminal 20 and the base station 10 may each include hardware, such as a microprocessor, a digital signal processor (DSP: Digital Signal Processor), an Application Specific Integrated Circuit (ASIC), a Programmable Logic Device (PLD), and a Field Programmable Gate Array (FPGA), which may implement some or all of the functional blocks. For example, processor 1001 may be implemented using at least one of these hardware components.

### (Conclusion of the embodiments)

In this specification, at least the terminal and the communication method described below are disclosed.

A terminal including a receiving unit that receives at least one of specific instruction information or a specific signal; and a control unit that performs at least one of controlling scheduling of a communication performed by another terminal, modifying the association with the scheduling terminal, requesting the modification of the association with the scheduling terminal, or transmitting information related to a channel state, based on at least one of the instruction information, information related to a channel state measured from the signal, or an association with a scheduling terminal.

According to the above-described configuration, in a case where the terminal is a scheduling terminal and in a case where a base station or another terminal detects that the scheduling, by the scheduling terminal, of the communication of the another terminal is not appropriately performed, the scheduling, by the scheduling terminal, of the sidelink communication of the another terminal can be stopped. In addition, in a case where the terminal is a terminal scheduled by another scheduling terminal and in a case where the scheduling by the scheduling terminal is stopped, the configuration of the connection can be modified.

The receiving unit may measure the channel state between the terminal and a transmission source of the signal, and, in a case where the channel state does not satisfy a certain criteria, the control unit may autonomously stop the scheduling of the communication of the another terminal.

According to the above-described configuration, in a case where it is detected that scheduling, by the scheduling terminal, of the another terminal is not appropriately performed, the scheduling terminal can autonomously stop the scheduling of the communication of the another terminal.

The receiving unit may measure the channel state between the terminal and a transmission source of the signal, and the terminal may further includes a transmitting unit that transmits information indicating the measured channel state to the transmission source of the signal.

According to the above-described configuration, the base station (or a terminal operating as the base station) can determine whether the scheduling by the scheduling terminal is to be continued, based on the information indicating the channel state received from the terminal.

In a case where the channel state measured by the receiving unit does not satisfy the certain criteria, the receiving unit may receive, from the transmission source of the signal, the instruction information for stopping the scheduling of the communication of the another terminal.

According to the above-described configuration, in a case where the channel state between the terminal and the base station (or the terminal operating as the base station) does not satisfy a certain criteria based on the information indicating the channel state received from the terminal, the base station (or a terminal operating as the base station) can determine that the scheduling by the scheduling terminal is to be stopped, and instruct the scheduling terminal to stop the scheduling.

In a case where the signal received by the receiving unit is information indicating that scheduling performed by the scheduling terminal other than the terminal itself is to be stopped for a communication by the terminal itself, the control unit may select at least one of transmitting a notification of the stop of the scheduling, modifying an association with the scheduling terminal, and requesting a modification of the association with the scheduling terminal.

According to the above-described configuration, in a case where the terminal is a terminal scheduled by another scheduling terminal and in a case where the scheduling by the scheduling terminal is stopped, a notification of the stop of the scheduling can be transmitted, and the configuration of the connection can be modified.

A communication method executed by a terminal, the method including receiving at least one of specific instruction information or a specific signal; and performing at least one of controlling scheduling of a communication performed by another terminal, modifying the association with the scheduling terminal, requesting the modification of the association with the scheduling terminal, or transmitting information related to a channel state, based on at least one of the instruction information, information related to a channel state measured from the signal, or an association with a scheduling terminal.

According to the above-described configuration, in a case where the terminal is a scheduling terminal and in a case where a base station or another terminal detects that the scheduling, by the scheduling terminal, of the communication of the another terminal is not appropriately performed, the scheduling, by the scheduling terminal, of the sidelink communication of the another terminal can be stopped. In addition, in a case where the terminal is a terminal scheduled by another scheduling terminal and in a case where the scheduling by the scheduling terminal is stopped, the configuration of the connection can be modified.

### (Supplemental Embodiments)

While the embodiments of the present invention are described above, the disclosed invention is not limited to the embodiments, and those skilled in the art will appreciate various alterations, modifications, alternatives, substitutions, or the like. Descriptions are provided using specific numerical examples to facilitate understanding of the invention, but, unless as otherwise specified, these values are merely examples and any suitable value may be used. Classification of the items in the above descriptions is not essential to the present invention, and the items described in two or more items may be used in combination as needed, or the items described in one item may be applied (as long as there is no contradiction) to the items described in another item. The boundaries of functional units or processing units in the functional block diagram do not necessarily correspond to the boundaries of physical components. An operation by a plurality of functional units may be physically performed by one component or an operation by one functional unit may be physically executed by a plurality of components. For the processing procedures described in the embodiments, the order of processing may be changed as long as there is no contradiction. For the convenience of the description of the process, the terminal 20 and the base station 10 are described using functional block diagrams, but such devices may be implemented in hardware, software, or a combination thereof. Software operated by a processor included in the terminal 20 in accordance with the embodiments of the present invention and software operated by a processor included in the base station 10 in accordance with the embodiments of the present invention may be stored in a random access memory (RAM), a flash memory, a read-only memory (ROM), an EPROM, an EEPROM, a register, a hard disk (HDD), a removable disk, a CD-ROM, a database, a server, or any other suitable storage medium.

Notification of information is not limited to the aspects/embodiments described in the disclosure, and notification of information may be made by another method. For example, notification of information may be implemented by physical layer signaling (e.g., Downlink Control Information (DCI), Uplink Control Information (UCI), higher layer signaling (e.g., Radio Resource Control (RRC) signaling, Medium Access Control (MAC) signaling, broadcast information (Master Information Block (MIB), System Information Block (SIB))), or other signals or combinations thereof. RRC signaling may be referred to as an RRC message, for example, which may be an RRC connection setup message, an RRC connection reconfiguration message, or the like.

The aspects/embodiments described in this disclosure may be applied to a system using at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), any other appropriate system, and a next generation system extended based on theses. Additionally, a plurality of systems may be combined (e.g., a combination of at least one of LTE and LTE-A and 5G) to be applied.

The processing procedures, sequences, flow charts, and the like of each aspect/embodiment described in this disclosure may be reordered, provided that there is no contradiction. For example, the methods described in this disclosure present elements of various steps in an exemplary order and are not limited to the particular order presented.

The particular operation described in this disclosure to be performed by the base station 10 may be performed by an upper node in some cases. It is apparent that in a network consisting of one or more network nodes having the base station 10, various operations performed for communicating with the terminal may be performed by at least one of the base station 10 and a network node other than the base station 10 (e.g., MME or S-GW can be considered, however, the network node is not limited to these). The case is exemplified above in which there is one network node other than the base station 10. However, the network node other than the base station 10 may be a combination of multiple other network nodes (e.g., MME and S-GW).

Input and output information may be stored in a specific location (e.g., memory) or managed using management tables. Input and output information may be overwritten, updated, or added. Output information may be deleted. The input information may be transmitted to another device.

The determination may be made by a value (0 or 1) represented by 1 bit, by a true or false value (Boolean: true or false), or by comparison of numerical values (e.g., a comparison with a predefined value).

The aspects/embodiments described in this disclosure may be used alone, in combination, or switched with implementation. Notification of predetermined information (e.g. "X" notice) is not limited to a method that is explicitly performed, and may also be made implicitly (e.g. "no notice of the predetermined information").

Software should be broadly interpreted to mean, regardless of whether referred to as software, firmware, middleware, microcode, hardware description language, or any other name, instructions, sets of instructions, code, code segments, program code, programs, subprograms, software modules, applications, software applications, software packages, routines, subroutines, objects, executable files, executable threads, procedures, functions, or the like.

Software, instructions, information, or the like may also be transmitted and received via a transmission medium. For example, when software is transmitted from a website, server, or other remote source using at least one of wireline technology (such as coaxial cable, fiber optic cable, twisted pair, digital subscriber line) and wireless technology (e.g., infrared or microwave), at least one of these wireline technology and wireless technology is included within the definition of a transmission medium.

The information, signals, or the like described in this disclosure may be represented using any of a variety of different techniques. For example, data, instructions, commands, information, signals, bits, symbols, chips, or the like which may be referred to throughout the above description may be represented by voltages, currents, electromagnetic waves, magnetic fields or magnetic particles, optical fields or photons, or any combination thereof.

The terms described in this disclosure and those necessary for understanding this disclosure may be replaced by terms having the same or similar meanings. For example, at least one of the channels and the symbols may be a signal (signaling). The signal may also be a message.

As used in this disclosure, the terms "system" and "network" are used interchangeably. The information, parameters, or the like described in the present disclosure may also be expressed using absolute values, relative values from predetermined values, or they may be expressed using corresponding separate information. For example, radio resources may be those indicated by an index.

The names used for the parameters described above are not restrictive in any respect. In addition, the mathematical equations using these parameters may differ from those explicitly disclosed in this disclosure. Since the various channels (e.g., PUCCH or PDCCH) and information elements can be identified by any suitable name, the various names assigned to these various channels and information elements are not in any way limiting.

In this disclosure, the terms "Base Station," "Radio Base Station," "Fixed Station," "NodeB," "eNodeB(eNB)," "gNodeB (gNB)," "Access Point," "Transmission Point," "Reception Point," "Transmission/Reception Point," "Cell," "Sector," "Cell Group," "Carrier," "Component Carrier," and the like may be used interchangeably. The base stations may be referred to in terms such as macro-cell, small-cell, femto-cell, or pico-cell.

The base station can accommodate one or more (e.g., three) cells. Where the base station accommodates a plurality of cells, the entire coverage area of the base station can be divided into a plurality of smaller areas, each smaller area can also provide communication services by means of a base station subsystem (e.g., an indoor small base station (RRH) or a remote Radio Head). The term "cell" or "sector" refers to a portion or all of the coverage area of at least one of the base station and base station subsystem that provides communication services at the coverage.

In this disclosure, terms such as "mobile station (MS: Mobile Station)", "user terminal", "user equipment (UE: User Equipment)", "terminal", or the like may be used interchangeably.

The mobile station may be referred to by one of ordinary skill in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable term.

At least one of a base station and a mobile station may be referred to as a transmitter, receiver, communication device, or the like. At least one of a base station and a mobile station may be a device installed in a mobile body, a mobile body itself, or the like. The mobile body may be a vehicle (e.g., a car or an airplane), an unmanned mobile (e.g., a drone or an automated vehicle), or a robot (manned or unmanned). At least one of a base station and a mobile station includes a device that does not necessarily move during communication operations. For example, at least one of a base station and a mobile station may be an Internet of Things (IoT) device such as a sensor.

In addition, the base station in the present disclosure may be replaced with the user terminal. For example, various aspects/embodiments of the present disclosure may be applied to a configuration in which communication between the base station and the user terminal is replaced with communication between multiple user terminals (e.g., may be referred to as Device-to-Device (D2D) or Vehicle-to-Everything (V2X)). In this case, a configuration may be such that the above-described function of the base station 10 is included in the user terminal 20. The terms "up" and "down" may also be replaced with the terms corresponding to terminal-to-terminal communication (e.g., "side"). For example, an uplink channel, a downlink channel, or the like may be replaced with a sidelink channel.

Similarly, the user terminal according to the present disclosure may be replaced with a base station. In this case, a configuration may be such that, the function included in the above-described user terminal 20 may be included in the base station 10.

The term "connected" or "coupled" or any variation thereof means any direct or indirect connection or connection between two or more elements and may include the presence of one or more intermediate elements between two elements "connected" or "coupled" with each other. The coupling or connection between the elements may be physical, logical, or a combination of these. For example, "connection" may be replaced with "access". As used in the present disclosure, the two elements may be considered as being "connected" or "coupled" to each other using at least one of the one or more wires, cables, and printed electrical connections and, as a number of non-limiting and non-inclusive examples, electromagnetic energy having wavelengths in the radio frequency region, the microwave region, and the light (both visible and invisible) region.

The reference signal may be abbreviated as RS (Reference Signal) or may be referred to as a pilot, depending on the standard applied.

As used in this disclosure, the expression "based on" does not mean "based on only" unless otherwise specified. In other words, the expression "based on" means both "based on only" and "at least based on."

As long as "include," "including," and variations thereof are used in this disclosure, the terms are intended to be inclusive in a manner similar to the term "comprising." Furthermore, the term "or" used in the disclosure is intended not to be an exclusive OR.

In the present disclosure, for example, if an article is added by translation, such as a, an, and the in English, the present disclosure may include that the noun following the article is plural.

In the present disclosure, the term "A and B are different" may imply that "A and B are different from each other." Note that the term may also imply "each of A and B is different from C." The terms, such as "separated" or "coupled," may also be interpreted similarly.

While the present invention is described in detail above, those skilled in the art will appreciate that the present invention is not limited to the embodiments described in this specification. The present invention may be implemented as modifications and variations without departing from the gist and scope of the present invention as defined by the claims. Accordingly, the description of this specification is for illustrative purposes only and is not intended to have any restrictive meaning with respect to the present invention.

### LIST OF REFERENCE SYMBOLS

- 10: base station
- 20: terminal
- 101: transmitting unit
- 102: receiving unit
- 103: control unit
- 201: transmitting unit
- 202: receiving unit
- 203: control unit
- 1001: processor
- 1002: memory
- 1003: storage
- 1004: communication device
- 1005: input device
- 1006: output device

## Claims

1. A terminal comprising:
a receiving unit that receives at least one of specific instruction information or a specific signal; and
a control unit that performs at least one of controlling scheduling of a communication performed by another terminal, modifying the association with the scheduling terminal, requesting the modification of the association with the scheduling terminal, or transmitting information related to a channel state, based on at least one of the instruction information, information related to a channel state measured from the signal, or an association with a scheduling terminal.

2. The terminal according to claim 1, wherein the receiving unit measures the channel state between the terminal and a transmission source of the signal, and
in a case where the channel state does not satisfy a certain criteria, the control unit autonomously stops the scheduling of the communication of the another terminal.

3. The terminal according to claim 1, wherein the receiving unit measures the channel state between the terminal and a transmission source of the signal, and
wherein the terminal further comprises a transmitting unit that transmits information indicating the measured channel state to the transmission source of the signal.

4. The terminal according to claim 2, wherein in a case where the channel state measured by the receiving unit does not satisfy the certain criteria, the receiving unit receives, from the transmission source of the signal, the instruction information for stopping the scheduling of the communication of the another terminal.

5. The terminal according to claim 1, wherein in a case where the signal received by the receiving unit is information indicating that scheduling performed by the scheduling terminal other than the terminal itself is to be stopped for a communication by the terminal itself, the control unit selects at least one of transmitting a notification of the stop of the scheduling, modifying an association with the scheduling terminal, and requesting a modification of the association with the scheduling terminal.

6. A communication method executed by a terminal, the method comprising:
receiving at least one of specific instruction information or a specific signal; and
performing at least one of controlling scheduling of a communication performed by another terminal, modifying the association with the scheduling terminal, requesting the modification of the association with the scheduling terminal, or transmitting information related to a channel state, based on at least one of the instruction information, information related to a channel state measured from the signal, or an association with a scheduling terminal.
